# EUROPÄISCHE PATENTSCHRIFT

(11) **EP 0 755 019 B1**
(45) Veröffentlichungstag und Bekanntmachung des Hinweises auf die Patenterteilung: **26.08.1998**
(21) Anmeldenummer: 96109965.2
(22) Anmeldetag: 20.06.1996
(51) Int. Cl.: G06K 9/34

(54) **Verfahren und Vorrichtung zur Bestimmung der Teilung bei Schriften mit fester Teilung**
Method and device for determining pitch for fixed-pitch fonts
Procédé et dispositif pour déterminer l'écartement des caractères de texte écartement constant

(30) Priorität: 23.06.1995 DE 19522394
(43) Veröffentlichungstag der Anmeldung: 22.01.1997
(73) Patentinhaber: SIEMENS AKTIENGESELLSCHAFT, 80333 München (DE)
(72) Erfinder: Brendel, Jakob, 78462 Konstanz (DE)

(56) Entgegenhaltungen:
- EP-B- 0 120 334
- WISSENSCHAFTLICHE BERICHTE AEG TELEFUNKEN, Bd. 47, Nr. 3/04, 1.Januar 1974, Seiten 90-99, XP002006414 SCHUERMANN J: "BILDVORBEREITUNG FUER DIE AUTOMATISCHE ZEICHENERKENNUNG"
- PATENT ABSTRACTS OF JAPAN vol. 013, no. 303 (P-896), 12.Juli 1989 & JP 01 078395 A (FUJITSU LTD), 23.März 1989,

## Beschreibung

Die vorliegende Erfindung betrifft ein Verfahren und eine Vorrichtung in automatischen Lesesystemen zur Bestimmung der Teilung bei Schriften mit fester Teilung. Automatische Lesesysteme werden z.B. in Briefverteilanlagen eingesetzt, um die Verteilung von Postsendungen entsprechend der gelesenen Postleitzahlen oder sonstigen Adreßbestandteilen in die zugeordneten Verteilfächer zu steuern. Automatische Lesesysteme lassen sich in zwei Teilsysteme gliedern, von denen das erste die Aufgabe der Bildvorbereitung hat und das zweite die Aufgabe der eigentlichen Erkennung. Die zu lesenden Zeichen liegen zunächst im optischen Bereich vor und werden für die weitere Verarbeitung mittels eines Abtasters, vorzugsweise eines integrierten Halbleiterabtasters, gewandelt. Für die weitere Verarbeitung wird die kontinuierlich gemessene Schwärzung im allgemeinen unmittelbar in eine schwarz-weiß Unterscheidung, also schwarze und weiße Bildpunkte umgewandelt. Aus diesem Abbild der Vorlage werden Textausschnitte, Zeilen und schließlich Einzelzeichen herauspräpariert. Hierbei ist bei Schritten mit fester Teilung auch die Teilung dieser Schritten zu bestimmen.

Mehr als 80 % aller maschinengeschriebenen Postsendungen sind mit Maschinen geschrieben, die eine feste Teilung der Schrift mit 10, 11, 12 oder 14 Zeichen/Inch verwenden. Eine Segmentierung solcher Schriften kann mittels Kämmen mit einer unterschiedlichen Anzahl von Zinken und Zwischenräumen zwischen den Zinken erfolgen.

Bekannte Verfahren und Vorrichtungen zur Bestimmung der Teilung bei Schriften mit fester Teilung verwenden die Schwarzpixel der bedruckten Zusammenhangsgebiete und die Lücken, die entstehen, wenn die Zusammenhangsgebiete mit umschreibenden Rechtecken versehen werden.

Nachteilig ist es, daß bei zerfallenen Schriften mehr Lücken und bei überlappenden Schriften weniger Lücken festgestellt werden und eine Teilungsbestimmung nicht durchführbar ist oder falsche Ergebnisse liefert. Bei zerfallenen Schriften bestehen die einzelnen Zeichen infolge schlechter Bedruckung aus mehr als einem zusammenhängenden Schwarzgebiet, bei überlappenden Schriften überlappen sich die Rechtecke der einzelnen aufeinander folgenden Zeichen ebenfalls infolge schlechter Bedruckung. Ein derartiges Verfahren ist bekannt aus EP-A-0 120 334.

In Wissenschaftliche Berichten AEG-Telefunken, Band 47, Heft 3/4, 1974, SS. 90-99 : G. Schürmann : "Bildvorverarbeitung für die automatische Zeichenerkennung", wird ein Verfahren Beschrieben zum Auffinden der Trennungslage zwischen Zeichen mittels einer Korrelation des Bildsignals mit einer Kammfunktion.

In der Zusammenfassung von JP-A-01 078 395 wird ein Verfahren zum Trennen von Zeichen beschrieben, in dem eine wahrscheinliche Zeilenhöhe aus einem Höhenhistogramm geschätzt wird.

Aufgabe der vorliegenden Erfindung ist es daher, ein Verfahren und eine Vorrichtung anzugeben, die bei zerfallenen und überlappenden Schriften das richtige Ergebnis liefern.

Diese Aufgabe wird durch ein Verfahren nach Anspruch 1 und eine Vorrichtung nach Anspruch 7 gelöst. Vorteilhafte Ausgestaltungen der Erfindung sind den Unteransprüchen zu entnehmen.

Das erfindungsgemäße Verfahren ist Bestandteil der Bildvorbereitung und realisiert eine Segmentierung von Zeilen und Wörtern, die aus Einzelzeichen bestehen. Das Verfahren setzt damit auf bestimmte, im folgenden kurz angegebener weitere Schritte, der Bildvorbereitung auf.

Die Eingabedaten sind die Binärbilder, d. h. die in schwarz/weiß Bildpunkte angesammelten Bilder der zu erkennenden Postsendungen. Diese Bilder werden in einen Pufferspeicher gelegt, wobei üblicherweise eine Datenkompression und vor der Weiterverarbeitung eine Datendekompression erfolgt. üblich ist auch eine Bildverbesserung, bei der Pixel rauschen, einzelne Löcher und Lücken in den Bildern eliminiert wird.

Weiter ist es üblich, die Bilder in horizontaler Richtung auszuschmieren, um die Datenmenge für die anschließenden Verarbeitungsschritte zu reduzieren.
In einem weiteren Schritt wird die genaue Position der Bildzone, die die elevante Information enthält, bei Postsendungen, vorzugsweise die Adreßinformation, bestimmt.

Als Kriterien werden hierfür geometrische Charakteristiken des Bildes, insbesondere von Adreßblöcken, die relativen Arrangements der verschiedenen Elemente des Bildes sowie Kenntnisse der Schreibgewohnheiten der Postbenutzer verwendet. Anschließend wird das Bild in verschiedene Zeilen separiert.
Aus den geometrischen Eigenschaften der Zeilen kann bestimmt werden, ob es sich bei dem Schriftgut um Handschrift oder Maschinenschrift handelt. Auf dieser Stufe des Gesamtprozesses liegen die Bilder als verschiedene zusammenhängende Schwarzgebiete vor. Üblicherweise wird jeder der obengenannten Prozesse von einem oaer mehreren Spezialisten ausgeführt.

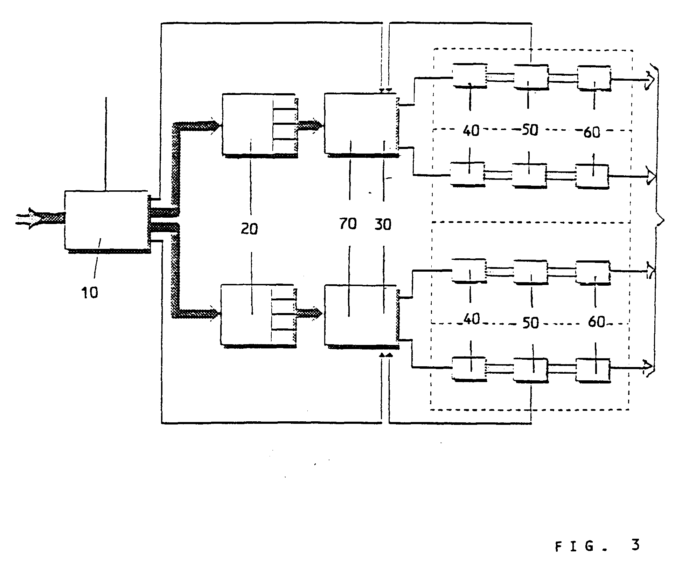

Fig. 3 zeigt eine schematische Darstellung einer Vorrichtung zur Bildvorbereitung mit mehreren Modulen zur Durchführung des erfindungsgemäßen Verfahrens. Die Schaltungsanordnung 10 empfängt Bilder vcm Scanner und separiert Bildpixeldaten von den Kontrollinformationen. Pixeldaten werden dann zu einem der acht Bildpuffer 20 transferiert, während die Kontrollinformation zum Postsendungsmanager 30 transferiert wird, der vorzugsweise auf einem Transputer angeordnet ist. Der Postsendungsmanager 30 ist mit den symbolischen Prozeßeinheiten 40, zur Bestimmung der Zusammenhangsgebiete 50, zur Lokalisierung von Adreßblöcken und Zeilen und 60, zur Segmentierung der Zeilen in Wörter und Zeichen verbunden. Die Ergebnisse des Segmentierungsmoduls 60 werden direkt zur in der Fig. 3 nicht dargestellten Zeichenerkennungsvorrichtung weitergegeben. Ein Modul 60 enthält vorzugsweise eine erfindungsgemäße Vorrichtung zur Bestimmung der Teilung bei Schriften mit fester Teilung sowie andere Vorrichtungen zur Segmentierung von Anschriften oder Schriften variabler Teilung.

In Fig. 3 bezeichnen die gepunkteten Linien Module, die hardwaremäßig zusammengefaßt sind, dünne Linien Datentransfer durch Transputerverbindungen und dicke Linien Datentransfer über Busverbindungen.

Erfindungsgemäß werden zunächst die einzelnen zusammenhängenden Schwarzgebiete mit umschreibenden Rechtecken versehen; dabei entstehen Lücken zwischen den umschreibenden Rechtecken, sofern die horizontalen Anfangskoordinaten des rechts folgenden umschreibenden Rechtecks größer sind als die Endkoordinaten des links daneben befindlichen umschreibenden Rechtecks.

Das größte Maximum im Höhenhistogramm, das aus den umschreibenden Rechtecken einer zu untersuchenden Zeile gebildet wird, wird als wahrscheinliche Zeilenhöhe angesehen und verwendet, um die Anzahl der notwendigen Lücken im Lückenhistogramm abzuschätzen. Diese Abschätzung kann verschiedenermaßen erfolgen. So kann von der zuvor festgestellten maximalen Zeilenhöhe auf die durchschnittliche Zeichenbreite geschlossen werden, da zwischen der maximalen Zeilenhöhe und der durchschnittlichen Zeichenbreite ein bestimmtes Verhältnis besteht, z.B. 1,4. Nun kann die Zeilenlänge durch die durchschnittliche Zeichenbreite geteilt werden und man erhält die wahrscheinliche Anzahl der Buchstaben und damit die wahrscheinliche Anzahl der Lücken zwischen den Buchstaben. Auf die genaue Anzahl der Lücken kommt es in diesem Verfahrensstadium nicht an, maßgebend ist vielmehr die richtige Größenordnung.

Es ist auch möglich, zum Schätzen der wahrscheinlichen Lückenanzahl eine empirische Tabelle zu verwenden, in der bestimmten wahrscheinlichen Zeilenhöhen und bestimmten Zeilenlängen jeweils eine Anzahl von Lücken zugeordnet sind. Dann wird die Anzahl der vorhandenen Lücken zwischen den umschreibenden Rechtecken festgestellt. Eine Lücke zwischen zwei benachbarten umschreibenden Rechtecken ist vorhanden, sofern die horizontalen Anfangskoordinaten des rechts folgenden umschreibenden Rechtecks größer sind als die horizontale Endkoordinate des links daneben befindlichen umschreibenden Rechtecks. Sind mehr Lücken vorhanden als geschätzt, werden nur die größten Lücken bis zur Anzahl der geschätzten Lücken verwendet. So entfallen bei zerfallenen Schriften die Lücken innerhalb der zerfallenen Zeichen. Sind weniger Lücken als geschätzt vorhanden, berühren oder überlappen sich möglicherweise zwei oder mehrere umschreibende Rechtecke.

Dies kann festgestellt werden, indem die horizontalen Koordinaten der benachbarten umschreibenden Rechtecke verglichen werden:

Ist der Wert der rechten horizontalen Koordinaten eines umschreibenden Rechtecks gleich oder größer dem Wert der linken horizontalen Kcordinaten des rechts daneben liegenden umschreibenden Rechtecks, so liegt eine Berührung oder Überlappung vor. Dann wird eine Lücke an der Berührungs- bzw. Überlappungsstelle konstruiert, die für die folgenden Schritte ebenfalls verwendet wird. Die so definierten Lücken werden jeweils in Lückenpunkte unterteilt, die jeweils die gleiche horizontale Ausdehnung aufweisen.

Dann werden die Abstände zwischen den einzelnen Lückenpunkten ermittelt mit Ausnahme der Abstände, die die Lückenpunkte innerhalb einer Lücke verbinden. Aus den ermittelten Abständen wird folgendermaßen das Abstandshistogramm ermittelt: Die ermittelten Abstände werden parallel zu einer Abszisse X gelegt, jeweils beginnend beim Wert X = 0. Dann werden Kämme mit allen für die Schrittgröße möglichen Teilungen über das Abstandshistogramm gelegt, beginnend mit dem ersten Kammzinken beim Wert X = 0. Als Grenzen der für die Schrittgröße möglichen Teilungen werden vorzugsweise bestimmte Vielfache der wahrscheinlichen Zeilen höhe verwendet, für die kleinstmögliche Teilung beispielsweise die 0,7fache wahrscheinliche Zeilen höhe und für die größtmögliche Teilung beispielsweise die 1,5 fache wahrscheinliche Zeilen höhe. Zwischen diesen Grenzen wird die Teilung beispielsweise jeweils um ein Pixel erhöht bzw. erniedrigt. Die Einträge an den Kammzinken, d. h. die Anzahl der Endpunkte der Abstände, die mit den jeweiligen Kammzinken übereinstimmen, werden aufaddiert. Die Teilung, die hierbei die größte Summe von Einträgen aufweist, wird als die gesuchte Teilung angesehen. Sofern ein Maximum für mehrere benachbarte Teilungen vorliegt, wird deren arithmetisches Mittel als gefundene Teilung angesehen.

Es ist besonders vorteilhaft, den Beginn und das Ende einer Zeile als Lücke anzusehen und einige Lückenpunkte entsprechend zu setzen. Weiterhin ist es besonders vorteilhaft, bei großen Lücken einige Lückenpunkte links und rechts an den Rändern der großen Lücke zu verwenden und somit zwei Lücken zu bilden, da große Lücken meist Leerzeichen sind.

Schließlich ist es vorteilhaft, bei sehr kleinen Lücken die Anzahl der Lückenpunkte auf die Anzahl der Lückenpunkte benachbarter Lücken auszudehnen.

Die Erfindung wird im folgenden anhand der Figuren näher erläutert.

Es zeigen:

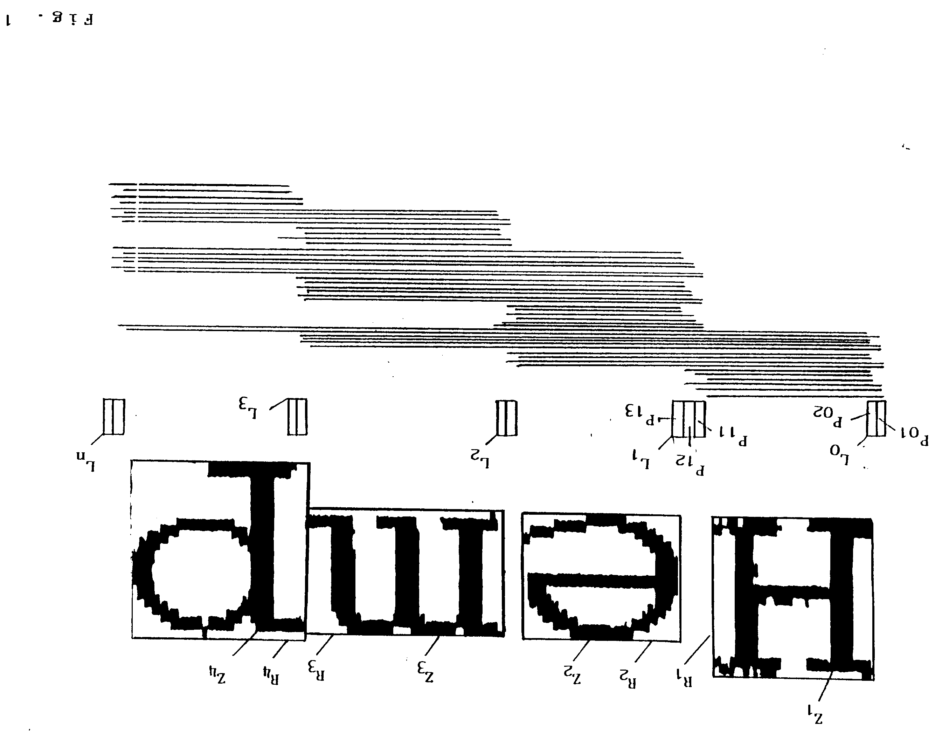

- Fig. 1:: eine Zeile einer Schrift samt Lückenhistogramm und den ermittelten Abständen für das Abstandshistogramm und
- Fig. 2:: Kämme mit Zinken, deren Abstände untereinander denen der möglichen Teilungen entsprechen und das Abstandshistogramm für die Zeile der Schrift aus Fig. 1.

Zunächst werden die zusammenhängenden Schwarzgebiete Z₁ bis Z₄ mit umschreibenden Rechtecken R₁ bis R₄ versehen. So entstehen die Lücken L₁, L₂. Aus dem zugehörigen, so entstandenen Höhenhistogramm, wird das oberste Maximum als wahrscheinliche Zeilenhöhe h angesehen und verwendet, um die Anzahl der notwendigen Lücken im Lückenhistogramm abzuschätzen.

Im vorliegenden Beispiel stellt die Höhe h des umschreibenden Rechtecks R₁ das oberste Maximum dar. Weiterhin wird die Anzahl der entdeckten Lücken L₁ bis L₂ zwischen den zusammenhängenden Schwarzgebieten Z₁ bis Z₄ erstellt.

Besonders vorteilhaft ist es, auch den Zeilenbeginn und das Zeilenende als Lücken L₀ und Lₙ mit einigen Lückenpunkten P₀₁, P₀₂, Pₙ₁, Pₙ₂ zu verwenden. Entsprechend der wahrscheinlichen Zeilenhöhe h und der tatsächlichen Zeilenlänge l wird die voraussichtliche Lückenanzahl geschätzt. Entsprechend der Zeilenlänge l und der wahrscheinlichen Zeilenhöhe h werden 5 Lücken geschätzt, jedoch nur 4 gefunden, nämlich L₀, L₁, L₂, Lₙ.

Im vorliegenden Beispiel berühren sich die umschreibenden Rechtecke R₃ und R₄. Deshalb wird zwischen dem Schwärzungssegment Z₃ und dem Schwärzungssegment Z₄ ebenfalls eine Lücke L₃ mit den Lückenpunkten P₃₁ und P₃₂ konstruiert, da sich die umschreibenden Rechtecke R₃ und R4 berühren oder überlappen und bei korrekter Bedruckung eine Lücke vcrhanden sein müßte. Dann werden die Abstände EA zwischen den ermittelten Lückenpunkten P₀₁ bis Pₙ₂ ermittelt mit Ausnahme der Abstände, die die Lückenpunkte P innerhalb einer Lücke L verbinden. Aus den ermittelten Abständen EA zwischen den Lückenpunkten wird das Abstandshistogramm AH ermittelt.

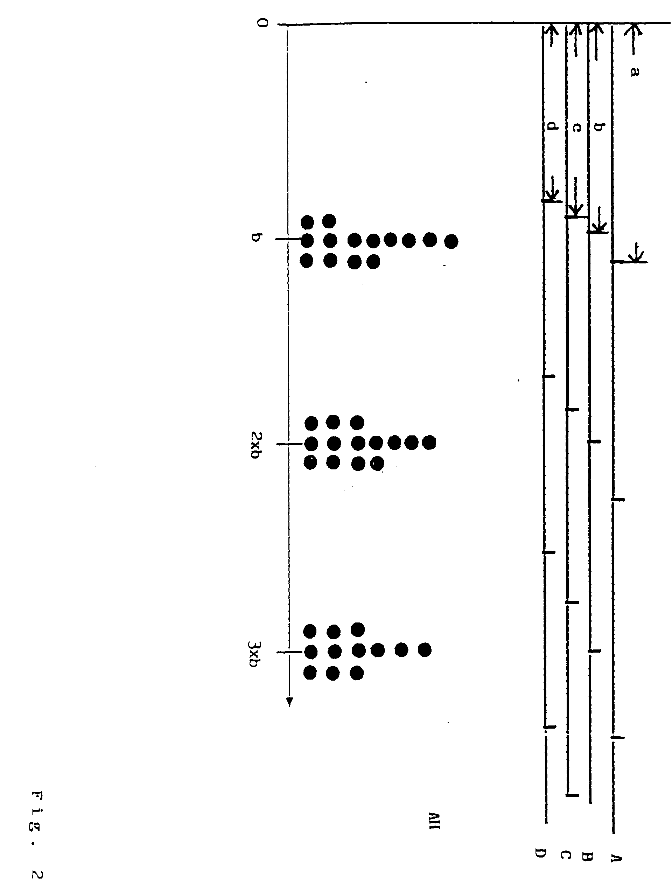

In Fig. 2 ist jeweils nur ein Endpunkt der einzelnen Abstände als Punkt dargestellt, die anderen Endpunkte der einzelnen ermittelten Abstände besitzen den Wert X = 0 und sind nicht dargestellt. Weiterhin werden Kämme (A,B,C,D) mit den Zinkenabständen der möglichen Teilungen (a,b,c,d) über das Abstandshistogramm AH gelegt, beginnend jeweils mit dem ersten Kammzinken ZK bei dem Wert X = 0 und die Einträge an den Kammzinken ZK aufaddiert. Schließlich wird die Teilung mit der höchsten Summe als die gesuchte Teilung angesehen, im vorliegenden 3eispiel die des Kammes 3. Im vorliegenden Beispiel wurden aus Darstellungsgesichtspunkten nur zwei bzw. drei Lückenpunkte pro Lücke verwendet. In der tatsächlichen Ausgestaltung können durchaus auch mehr Lückenpunkte pro Lücke verwendet werden, indem die Breite der Lückenpunkte einheitlich für alle Lückenpunkte variiert wird und so entsprechend der jeweiligen Breite der jeweiligen Lücke die entsprechende Anzahl von Lückenpunkten verwendet wird.

## Patentansprüche

1. Verfahren zur Bestimmung der Teilung bei Schriften mit fester Teilung, bei dem die zusammenhängenden Schwarzgebiete einer Zeile (Z) mit umschreibenden Rechtecken (R) versehen werden,
bei dem aus den umschreibenden Rechtecken (R) ein Höhenhistogramm gebildet wird,
bei dem aus dem Höhenhistogramm die wahrscheinliche Zeilenhöhe (h) bestimmt wird,
bei dem Lücken (L) zwischen den umschreibenden Rechtecken (R) festgestellt werden,
bei dem entsprechend der wahrscheinlichen Zeilenhöhe (h) und der Zeilenlänge (l) die voraussichtliche Lückenanzahl geschätzt wird,
bei dem entsprechend der geschätzten Lückenanzahl und der festgestellten Lückenanzahl bestimmt wird, welche Lücken (L) für die Teilungsbestimmung verwendet werden,
bei dem aus allen Abständen (EA) zwischen den Lückenpunkten (P) der verwendeten Lücken (L) ein Abstandshistogramm (AH) gebildet wird, mit Ausnahme der Abstände, die die Lückenpunkte (P) innerhalb einer Lücke (L) verbinden,
bei dem jeweils ein Kamm (A,B,C,D) mit dem Zinkenabstand der möglichen Teilungen (a,b,c,d) entsprechend der wahrscheinlichen Zeilenhöhe über das Abstandshistogramm (AH) gelegt wird und die Einträge an den Kammzinken (ZK) aufaddiert werden,
bei dem die Teilung (a,b,c,d) mit der höchsten Summe als Teilung der Zeile angesehen wird.

2. Verfahren nach Anspruch 1,
bei dem einige Punkte am Beginn und Ende der Zeile ebenfalls als Lückenpunkte (P) verwendet werden.

3. Verfahren nach Anspruch 1 oder 2,
bei dem bei großen Lücken nur einige Punkte links und rechts als Lückenpunkte (P) verwendet werden.

4. Verfahren nach einem der vorstehenden Ansprüche,
bei dem einige Lückenpunkte (P) bei Überlappungsstellen oder Berührungsstellen das zusammenhängende Schwarzgebiet (Z) eingetragen werden.

5. Verfahren nach einem der vorstehenden Ansprüche,
bei dem Abstände, die eine bestimmte Größenordnung übersteigen, nicht in das Abstandshistogramm (AH) aufgenommen werden.

6. Verfahren nach einem der vorstehenden Ansprüche,
bei dem beim Vorliegen mehrerer benachbarter Maxima für verschiedene Teilungen (a, b, c, d) das arithmetische Mittel dieser Maxima als Teilung angesehen wird.

7. Automatisches Lesesystem mit einer Vorrichtung zur Bestimmung der Teilung bei Schriften mit fester Teilung, wobei die Vorrichtung mit Mitteln ausgestattet ist, durch die jeweils die zusammenhängenden Schwarzgebiete (Z) mit umschreibenden Rechtecken (R) versehen werden,
aus den umschreibenden Rechtecken (R) ein Höhenhistogramm gebildet wird,
aus dem Höhenhistogramm die wahrscheinliche Zeilenhöhe (h) bestimmt wird,
Lücken (L) zwischen den umschreibenden Rechtecken (R) festgestellt werden,
entsprechend der wahrscheinlichen Zeilenhöhe und der Zeilenlänge die voraussichtliche Lückenanzahl geschätzt wird,
entsprechend der geschätzten Lückenanzahl und der festgestellten Lückenanzahl bestimmt wird, welche Lücken (L) verwendet werden,
ein Abstandshistogramm (AH) aus allen Abständen (EA) zwischen den Lückenpunkten (P) der verwendeten Lücken (L) gebildet wird, mit Ausnahme der Abstände, die die Lückenpunkte (P) innerhalb einer Lücke (L) verbinden,
jeweils ein Kamm (A,B,C,D) mit dem Zinkenabstand der möglichen Teilungen (a,b,c,d) entsprechend der wahrscheinlichen Zeilenhöhe über das Abstandshistogramm (AH) gelegt wird und die Einträge an den Kammzinken (ZK) aufaddiert werden,
die Teilung (a,b,c,d) mit der höchsten Summe als Teilung der Zeile angesehen wird.

## Claims

1. Method for determining the spacing in the case of types having fixed spacing, in which the continuous black areas of a line (Z) are provided with outlining rectangles (R),
in which a height histogram is formed from the outlining rectangles (R),
in which the probable line height (h) is determined from the height histogram,
in which gaps (L) are established between the outlining rectangles (R),
in which, in accordance with the probable line height (h) and the line length (1), the predicted number of gaps is estimated,
in which, in accordance with the estimated number of gaps and the established number of gaps, it is determined which gaps (L) are used for determining the spacing,
in which a distance histogram (AH) is formed from all distances (EA) between the gap points (P) of the gaps (L) which are used, with the exception of the distances which join the gap points (P) within a gap (L),
in which in each case a comb (A, B, C, D) having the tooth distance of the possible spacings (a, b, c, d) corresponding to the probable line height is placed over the distance histogram (AH) and the entries at the comb teeth (ZK) are added up, and
in which the spacing (a, b, d, c) having the highest sum is seen as the spacing of the line.

2. Method according to claim 1, in which some points at the start and end of the line are likewise used as gap points (P).

3. Method according to claim 1 or 2, in which in the case of large gaps, only some points to the left and right are used as gap points (P).

4. Method according to one of the preceding claims, in which some gap points (P) are entered at overlapping points or contact points of the continuous black area (Z).

5. Method according to one of the preceding claims, in which distances which exceed a certain order of magnitude are not taken into the distance histogram.

6. Method according to one of the preceding claims, in which in the case of the presence of a plurality of adjacent maxima for various spacings (a, b, c, d), the arithmetical average of these maxima is seen as the spacing.

7. Automatic reading system having a device for determining the spacing in the case of types having fixed spacing, with the device being provided with means by which in each case the continuous black areas (Z) are provided with outlining rectangles (R),
a height histogram is formed from the outlining rectangles (R),
the probable line height (h) is determined from the height histogram,
gaps (L) are established between the outlining rectangles (R),
in accordance with the probable line height (h) and the line length (1), the predicted number of gaps is estimated,
in accordance with the estimated number of gaps and the established number of gaps, it is determined which gaps (L) are used,
a distance histogram (AH) is formed from all distances (EA) between the gap points (P) of the gaps (L) which are used, with the exception of the distances which join the gap points (P) within a gap (L),
in each case a comb (A, B, C, D) having the tooth distance of the possible spacings (a, b, c, d) corresponding to the probable line height is placed over the distance histogram (AH) and the entries at the comb teeth (ZK) are added up, and
the spacing (a, b, d, c) having the highest sum is seen as the spacing of the line.

## Revendications

1. Procédé pour déterminer l'écartement des caractères dans des écritures à écartement constant, dans lequel on munit les zones noires d'un seul tenant d'une ligne (Z) de rectangles (R) qui les entourent et
on forme, à partir des rectangles (R) qui les entourent, un histogramme des hauteurs,
on détermine, à partir de l'histogramme des hauteurs, la hauteur de ligne probable (h),
on constate des lacunes (L) entre les rectangles (R) qui les entourent,
on estime, en fonction de la hauteur de ligne probable (h) et de la longueur de ligne (1), le nombre de lacunes prévisibles,
on détermine, en fonction du nombre estimé de lacunes et du nombre des lacunes trouvées, les lacunes (L) que l'on utilise pour déterminer l'écartement,
on forme un histogramme (AH) des distances à partir de toutes les distances (EA) entre les points de lacune (P) des lacunes utilisées (L), à l'exception des distances qui relient les points de lacune (P) à l'intérieur d'une lacune (L),
on place sur l'histogramme (AH) des distances à chaque fois un peigne (A, B, C, D) ayant une distance entre dents égale aux écartements possibles (a, b, c, d) en fonction de la hauteur de ligne probable et on additionne les enregistrements se trouvant sur les dents de peigne (ZK),
on considère l'écartement (a, b, c, d) ayant la plus grande somme comme étant l'écartement de la ligne.

2. Procédé selon la revendication 1, dans lequel on utilise également comme points de lacune (P) quelques points au début et à la fin de la ligne.

3. Procédé selon la revendication 1 ou 2, dans lequel, pour des lacunes grandes, on utilise seulement quelques points à gauche et à droite comme points de lacune (P).

4. Procédé selon l'une des revendications précédentes, dans lequel on insère quelques points de lacune (P) aux endroits de chevauchement ou de contact de zones noires (Z)d'un seul tenant.

5. Procédé selon l'une des revendications précédentes, dans lequel on n'enregistre pas dans l'histogramme (AH) des distances qui dépassent un certain ordre de grandeur.

6. Procédé selon l'une des revendications précédentes, dans lequel, lorsqu'il existe plusieurs maxima voisins pour des écartements (a, b, c, d), on considère la moyenne arithmétique de ces maxima comme étant l'écartement.

7. Système de lecture automatique comportant un dispositif pour déterminer l'écartement des caractères dans des écritures à écartement constant, le dispositif étant équipé de moyens qui permettent : de munir les zones noires (Z) d'un seul tenant de rectangles (R) qui les entourent ,
de former, à partir des rectangles (R) qui les entourent, un histogramme des hauteurs,
de déterminer, à partir de l'histogramme des hauteurs, la hauteur de ligne probable (h),
de constater des lacunes (L) entre les rectangles (R) entourant,
d'estimer, en fonction de la hauteur de ligne probable et de la longueur de ligne, le nombre de lacunes prévisibles,
de déterminer, en fonction du nombre estimé de lacunes et du nombre des lacunes trouvé, les lacunes (L) qui sont utilisées,
de former un histogramme (AH) des distances à partir de toutes les distances (EA) entre les points de lacune (P) des lacunes utilisées (L), à l'exception des distances qui relient les points de lacune (P) à l'intérieur d'une lacune (L),
de placer sur l'histogramme (AH) des distances à chaque fois un peigne (A, B, C, D) ayant une distance entre dents égale aux écartements possibles (a, b, c, d) en fonction de la hauteur de ligne probable et d'additionner les enregistrements se trouvant sur les dents de peigne (ZK),
de considérer l'écartement (a, b, c, d) ayant la plus grande somme comme étant l'écartement de la ligne.
